# EUROPEAN PATENT APPLICATION

(11) **EP 4 498 203 A1**
(43) Date of publication of application: **29.01.2025**
(21) Application number: 24188098.8
(22) Date of filing: 11.07.2024
(51) Int. Cl.: G05F 1/56, G05F 1/575

(54) **VOLTAGE REGULATOR WITH DIODE RETENTION AND AN ELECTRONIC DEVICE USING THE SAME**

(30) Priority: 25.07.2023 US 202363515350 P; 05.07.2024 US 202418764852
(71) Applicant: MediaTek Inc., Hsinchu City 30078 (TW)
(72) Inventor: HSU, Chung-Wei, 30078 Hsinchu City (TW); TSENG, Wei-Hsin, 30078 Hsinchu City (TW)
(74) Representative: Haseltine Lake Kempner LLP

(57) **Abstract**

A voltage regulator with diode retention is shown, which includes an input terminal receiving a supply voltage, an output terminal providing a regulated voltage, and a main circuit coupled between the input terminal and the output terminal. In a normal mode, the main circuit transforms the supply voltage to a first voltage as the regulated voltage. In a sleep mode, the voltage regulator provides a diode connected between the input terminal and the output terminal of the voltage regulator, to generate a second voltage as the regulated voltage. The second voltage is lower than the first voltage.

## Description

This application claims the benefit of U.S. Provisional Application No. 63/515,350, filed July, 25, 2023, the entirety of which is incorporated by reference herein.

### BACKGROUND OF THE INVENTION

### Field of the Invention

The present invention relates to voltage regulators.

### Description of the Related Art

A voltage regulator is a circuit that generates a regulated voltage irrespective of changes in the supply voltage or load conditions. Regulated voltage is typically used to power digital devices.

A reliable and small-sized voltage regulator is called for.

### BRIEF SUMMARY OF THE INVENTION

A voltage regulator with diode retention is proposed in the disclosure.

A voltage regulator with diode retention in accordance with an exemplary embodiment of the disclosure includes an input terminal receiving a supply voltage, an output terminal providing a regulated voltage, and a main circuit coupled between the input terminal and the output terminal. In a normal mode, the main circuit transforms the supply voltage to a first voltage as the regulated voltage. In a sleep mode, the voltage regulator provides a diode connected between the input terminal and the output terminal of the voltage regulator, to generate a second voltage as the regulated voltage. The second voltage is lower than the first voltage.

In an exemplary embodiment, an electronic device using the aforementioned voltage regulator is shown. The electronic device further has a digital device including digital flip-flops. The digital device is powered by the regulated voltage provided by the aforementioned voltage regulator, with data retention in the sleep mode. The data retention in the sleep mode is achieved by the second voltage generated by the voltage regulator in the sleep mode.

In an exemplary embodiment, the main circuit has a power transistor that is a metal-oxide-semiconductor field-effect transistor, and has a drain terminal coupled to the input terminal of the voltage regulator, and a source terminal coupled to the output terminal of the voltage regulator. In the normal mode, the power transistor is biased to provide an active current to a load device connected to the output terminal of the voltage regulator. In the sleep mode, the power transistor is biased to turn off the active current, and the diode, which is another device different from the power transistor, is connected between the input terminal and the output terminal of the voltage regulator to provide a standby current to the load device. The standby current is lower than the active current. Due to the proper value of the standby current, the DFFs in a digital device powered by the voltage regulator still have the capability of data retention in the sleep mode.

In an exemplary embodiment, the power transistor is a core device that can be operated within a limited voltage range that is narrower than the operational range corresponding to the supply voltage. The voltage regulator does not use any high-voltage devices between the input terminal of the voltage regulator and the drain terminal of the power transistor. A high-voltage device can be operated within a high-voltage range that is wider than the limited voltage range. A small-sized voltage regulator is achieved, and the reliability of the voltage regulator is guaranteed.

In an exemplary embodiment, the diode enabled in the sleep mode is provided by the main circuit itself. The main circuit has a power transistor connected between the input terminal and the output terminal of the voltage regulator to generate an active current in the normal mode, wherein the active current is fed to a load device connected to the output terminal of the voltage regulator. In the sleep mode, the gate terminal of the power transistor is coupled to the drain terminal of the power transistor to work as the diode to provide a standby current to the load device. The standby current lower than the active current is also properly designed. Thus, in the sleep mode, the DFFs in a digital device powered by the voltage regulator also have the capability of data retention. In this type of exemplary embodiments, the power transistor may be a core device operated within a limited voltage range that is narrower than the operational range corresponding to the supply voltage. The voltage regulator may not use any high-voltage devices between the input terminal of the voltage regulator and the drain terminal of the power transistor. A high-voltage device can be operated within a wider high-voltage range than the limited voltage range. A small-sized voltage regulator is achieved, and the reliability of the voltage regulator is guaranteed.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:
FIG. 1 illustrates an electronic device 100 in accordance with an exemplary embodiment of the disclosure;
FIG. 2 illustrates a voltage regulator 200 in accordance with an exemplary embodiment of the disclosure;
FIG. 3A and FIG. 3B illustrates the details of the voltage regulator 200 in accordance with an exemplary embodiment of the disclosure; and
FIG. 4A and FIG. 4B illustrate a voltage regulator that uses its power transistor Mpower to provide the diode path in the sleep mode in accordance with an exemplary embodiment of the disclosure.

### DETAILED DESCRIPTION OF THE INVENTION

The following description is made for the purpose of illustrating the general principles of the invention and should not be taken in a limiting sense. The scope of the invention is best determined by reference to the appended claims.

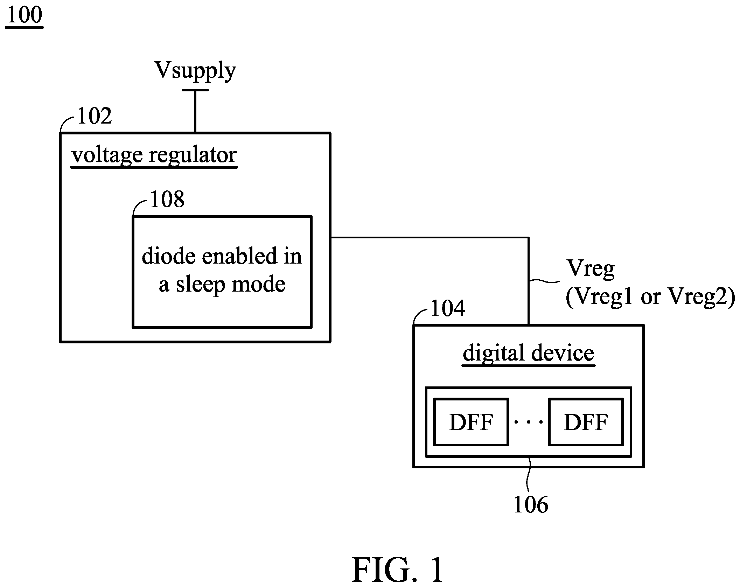

FIG. 1 illustrates an electronic device 100 in accordance with an exemplary embodiment of the disclosure, which includes a voltage regulator 102 with diode retention, and a digital device 104 including digital flip-flops (DFFs) 106. The voltage regulator 102 with diode retention includes a diode 108 enabled in a sleep mode. In a normal mode, the diode 108 is disabled, and the voltage regulator 102 transforms a supply voltage Vsupply (received by its input terminal that is also presented as Vsupply hereinafter) to a first voltage Vreg1 as the regulated voltage Vreg provided at its output terminal (also presented as Vreg hereinafter) to power the digital device 104. In the sleep mode, the diode 108 in the voltage regulator 102 is enabled to generate a second voltage Vreg2 as the regulated voltage Vreg to power the digital device 104. The second voltage Vreg2 lower than the first voltage Vreg1 is designed for data retention of the DFFs 106. In this way, the data stored in the digital device 104 will not lost when the electronic device 100 is operated in the sleep mode.

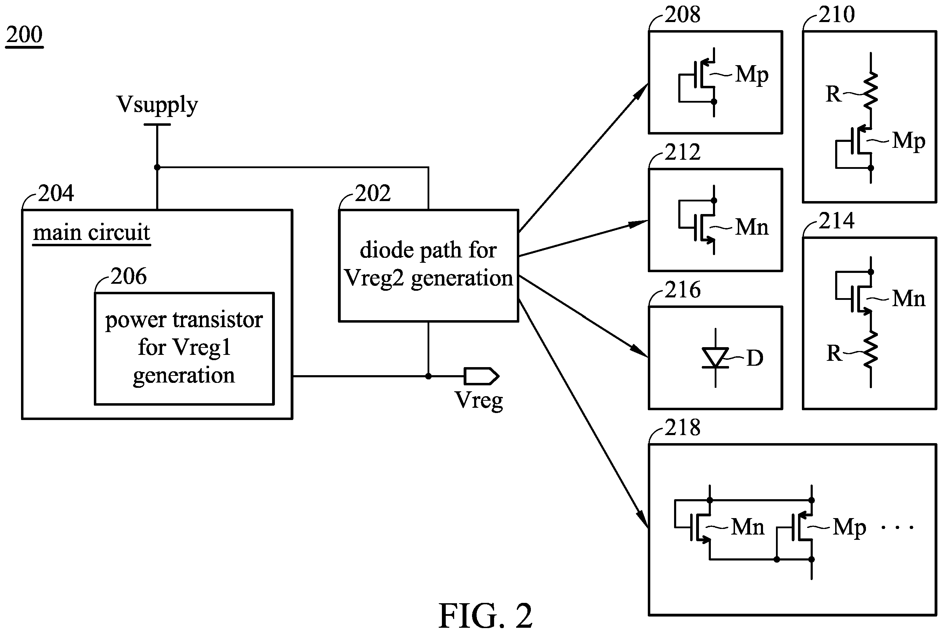

FIG. 2 illustrates a voltage regulator 200 in accordance with an exemplary embodiment of the disclosure. In addition to the diode path 202 including the diode 108 introduced in FIG. 1, the voltage regulator 200 further includes a main circuit 204 that operates a power transistor 206 to generate the first voltage Vreg1 as the regulated voltage Vreg in the normal mode. The diode (108 in the diode path 202) connected between the input terminal Vsupply and the output terminal Vreg to generate the second voltage Vreg2 as the regulated voltage Vreg in the sleep mode is another device different from the power transistor 204.

As shown, the diode path 202 may be implemented in many ways.

The diode path 202 may be implemented as the circuit 208, which includes a p-channel metal-oxide-semiconductor field-effect transistor (PMOS) Mp having a source terminal coupled to the input terminal Vsupply of the voltage regulator, a drain terminal coupled to the output terminal Vreg of the voltage regulator, and a gate terminal coupled to the drain terminal of the PMOS Mp.

The diode path 202 may be implemented as the circuit 210. In comparison with the circuit 208, the circuit 210 further includes a current-to-voltage component (such as a resistor R, but not limited thereto) coupled between the input terminal Vsupply of the voltage regulator and the source terminal of the PMOS Mp.

The diode path 202 may be implemented as the circuit 212, which includes an n-channel metal-oxide-semiconductor field-effect transistor (NMOS) Mn having a drain terminal coupled to the input terminal Vsupply of the voltage regulator, a source terminal coupled to the output terminal Vreg of the voltage regulator, and a gate terminal coupled to the drain terminal of the NMOS Mn.

The diode path 202 may be implemented as the circuit 214. In comparison with the circuit 212, the circuit 214 further includes a current-to-voltage component (such as a resistor R, but not limited thereto) coupled between the source terminal of the NMOS Mn and the output terminal Vreg of the voltage regulator.

The diode path 202 may be implemented as the circuit 216, which includes a two-end component D having an anode coupled to the input terminal Vsupply of the voltage regulator and a cathode coupled to the output terminal Vreg of the voltage regulator.

The diode path 202 may be implemented as the circuit 218, which includes an NMOS Mn and at least one PMOS Mp. The NMOS Mn has a drain terminal coupled to the input terminal Vsupply of the voltage regulator, a source terminal coupled to the output terminal Vreg of the voltage regulator, and a gate terminal coupled to the drain terminal of the NMOS Mn. The PMOS Mp has a source terminal coupled to the input terminal Vsupply of the voltage regulator, a drain terminal coupled to the output terminal Vreg of the voltage regulator, and a gate terminal coupled to the drain terminal of the PMOS Mp. In an exemplary embodiment, the NMOS Mn is a core device, and the PMOSs Mp connected in parallel with the NMOS Mn are input and output (IO) devices. The core device Mn operates within a limited voltage range, and the IO devices (Mp) operate within a wider high-voltage range than the limited voltage range. The core device Mn and the IO devices (Mp) may deal with different corner problems.

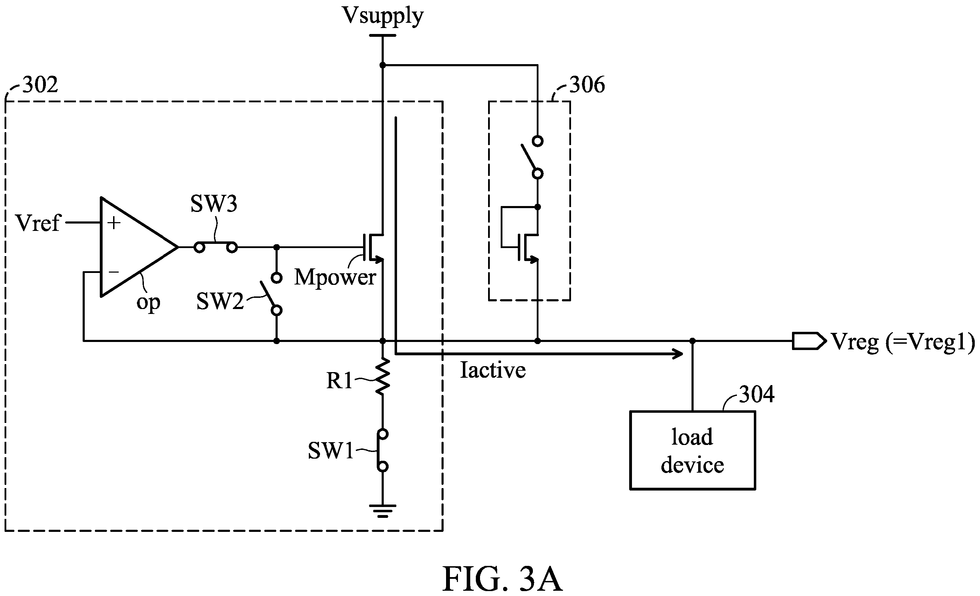

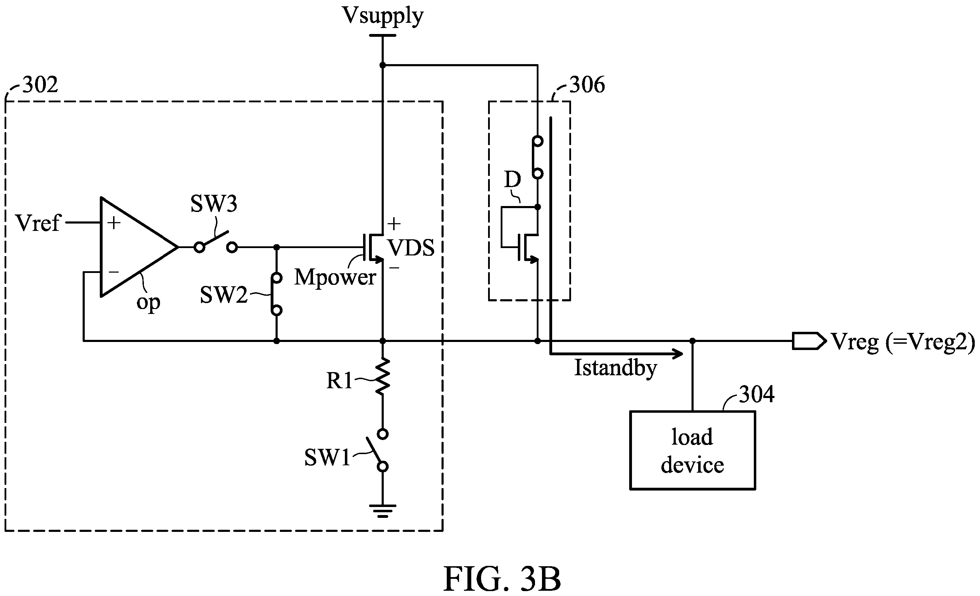

FIG. 3A and FIG. 3B illustrates the details of the voltage regulator 200 in accordance with an exemplary embodiment of the disclosure.

FIG. 3A illustrates the normal mode design. The main circuit 302 of the proposed voltage regulator has a power transistor Mpower connected between the input terminal Vsupply and the output terminal Vref of the voltage regulator, to generate an active current Iactive in the normal mode. The active current Iactive is fed to a load device 304 (e.g. the aforementioned digital device 104 of FIG. 1) connected at the output terminal Vreg of the voltage regulator. In the normal mode, the diode path 306 is disconnected from the voltage regulator. The first voltage Vreg1 is generated by the main circuit 302 as the regulated voltage Vreg.

FIG. 3B illustrates the sleep mode design. In the sleep mode, the power transistor Mpower is biased to turn off the active current Iactive presented in FIG. 3A, and the diode D is provided on the diode path 306. As shown, the diode D is another device different from the power transistor Mpower, and is connected between the input terminal Vsupply and the output terminal Vreg of the voltage regulator in the sleep mode to provide a standby current Istandby to the load device 304. The standby current Istandby is lower than the active current Iactive. The second voltage Vreg2 lower than the first voltage Vregl, therefore, is generated as the regulated voltage Vreg in the sleep mode. Data retention in the DFFs of the load device 304 is achieved in the sleep mode.

In figures 3A and 3B, the power transistor Mpower is a metal-oxide-semiconductor field-effect transistor (NMOS as shown), and has a drain terminal coupled to the input terminal Vsupply of the voltage regulator, and a source terminal coupled to the output terminal Vref of the voltage regulator. In the illustrated example, the main circuit 302 further has a first resistor R1, three switches SW1~SW3, and an operational amplifier op. The first resistor R1 and the first switch SW1 are coupled in series between the source terminal of the power transistor Mpower and a ground terminal. The second switch SW2 is placed between a gate terminal and the source terminal of the power transistor Mpower. The operational amplifier op has a first input terminal receiving a reference voltage Vref, and a second input terminal coupled to the source terminal of the power transistor Mpower. The third switch SW3 is coupled between an output terminal of the operational amplifier op and the gate terminal of the power transistor Mpower.

Referring to FIG. 3A, in the normal mode, the first switch SW1 is closed, the second switch SW2 is open, and the third switch SW3 is closed. The first voltage Vreg1 is generated as the regulated voltage Vreg.

Referring to FIG. 3B, in the sleep mode, the first switch SW1 is open, the second switch SW2 is closed, and the third switch SW3 is open. The second voltage Vreg2 is generated as the regulated voltage Vreg.

In the other exemplary embodiments, the main circuit 302 generating the first voltage Vreg1 in the normal mode may be replaced by other kinds of voltage regulating circuits. The details of the main circuit 302 are not limited to the illustrated components.

In an exemplary embodiment, the power transistor Mpower is a core device operated within a limited voltage range that is narrower than the operational range corresponding to the supply voltage Vsupply. The proposed voltage regulator, as shown, does not use any high-voltage devices (specifically, devices that can be operated within a wider high-voltage range than the limited voltage range) between the input terminal Vsupply of the voltage regulator and the drain terminal of the power transistor Mpower. In cases where the supply voltage Vsupply is higher than the maximum tolerable voltage of the power transistor Mpower, the power transistor Mpower in the sleep mode (referring to FIG. 3B) is still well protected because the across voltage VDS of the power transistor Mpower is (Vsupply-Vreg2), within the tolerable range of the power transistor Mpower. No high-voltage device is required to protect the power transistor Mpower. The reliability of the power transistor Mpower is guaranteed, and the circuit size of the voltage regulator can be small.

However, in some designs, there may be a high-voltage device between the input terminal Vsupply of the voltage regulator and the drain terminal of the power transistor Mpower. It depends on the design requirements.

In some exemplary embodiments, the diode 108 illustrated in FIG. 1 is provided by changing the bias situation of the power transistor Mpower.

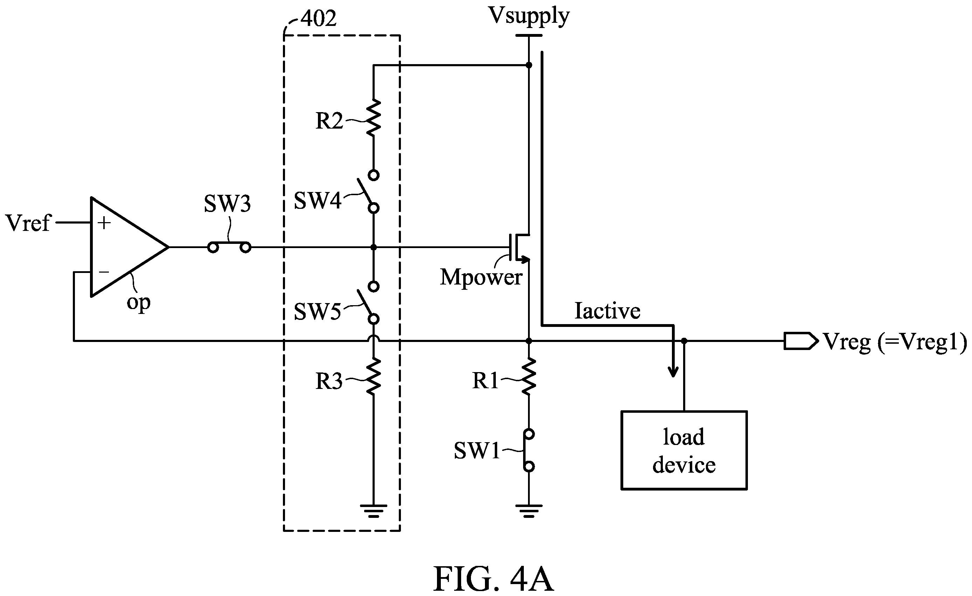

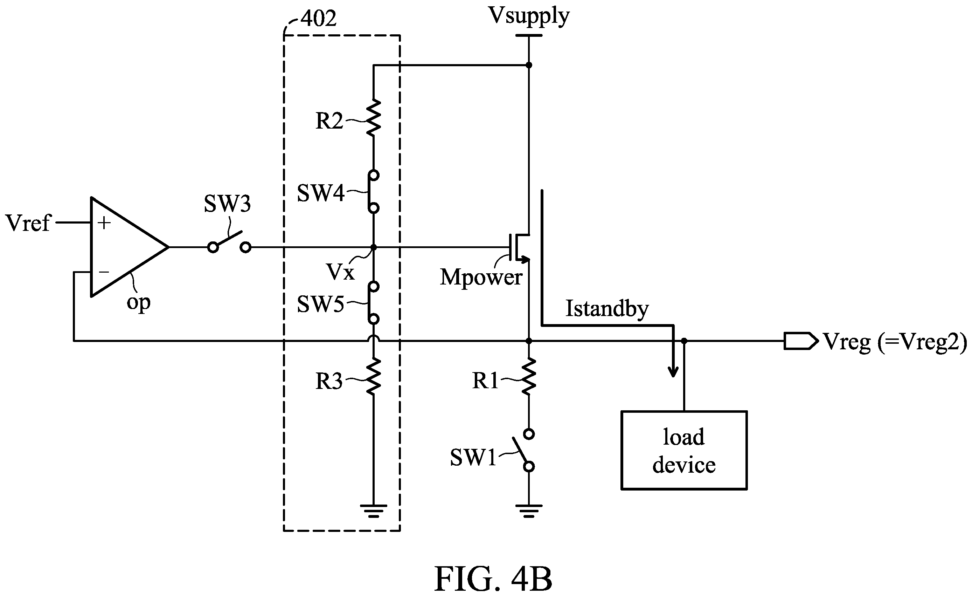

FIG. 4A and FIG. 4B illustrate a voltage regulator that uses its power transistor Mpower to provide the diode path in the sleep mode in accordance with an exemplary embodiment of the disclosure.

FIG. 4A illustrates the normal mode design. The power transistor Mpower connected between the input terminal Vsupply and the output terminal Vref of the voltage regulator generates an active current Iactive to be fed to a load device connected to the output terminal Vreg of the voltage regulator. The first voltage Vreg1 is generated as the regulated voltage Vreg.

FIG. 4B illustrates the sleep mode design. A gate terminal of the power transistor Mpower is coupled to a drain terminal of the power transistor Mpower through the second resistor R2, to form the diode that provides a standby current Istandby to the load device. The standby current Istandby is lower than the active current Iactive. The second voltage Vreg2 lower than the first voltage Vreg1 is generated as the regulated voltage Vreg. Data retention in the DFFs of the load device is achieved.

As illustrated, a voltage divider 402 is proposed in the voltage regulator shown in figures 4A and 4B. The voltage divider 402 is enabled in the sleep mode (FIG. 4B) to divide the supply voltage Vsupply to generate a bias voltage Vx that is coupled to the gate terminal of the power transistor Mpower. The voltage divider 402 includes two resistors R2 and R3, and two switches SW4 and SW5. The second resistor R2 and a fourth switch SW4 are coupled in series between the input terminal Vsupply of the voltage divider and the gate terminal of the power transistor Mpower. The third resistor R3 and a fifth switch SW5 are coupled in series between the gate terminal of the power transistor Mpower and a ground terminal.

Referring to FIG. 4A, in the normal mode, the fourth switch SW4 and the fifth switch SW5 are open, and so that the voltage divider 402 is disabled.

Referring to FIG. 4B, in the sleep mode, the fourth switch SW4 and the fifth switch SW5 are closed, and so that the power transistor Mp is biased to behave as a diode.

In the example illustrated in figures 4A and 4B, the voltage regulator has a first resistor R1, switches SW1 and SW3, and an operational amplifier op as mentioned in figures 3A and 3B, but does not use the second switch SW2 mentioned in figures 3A and 3B. The details of the voltage regulator are not limited to the illustrated components.

In an exemplary embodiment, the power transistor Mpower in the example of figures 4A and 4B is a core device operated within a limited voltage range that is narrower than the operational range corresponding to the supply voltage Vsupply. The proposed voltage regulator, as shown in figures 4A and 4B, does not use any high-voltage devices (specifically, high-voltage devices which can be operated within a wider high-voltage range than the limited voltage range) between the input terminal Vsupply of the voltage regulator and the drain terminal of the power transistor Mpower. With the voltage divider 402, the power transistor Mpower is always well protected. No high-voltage device is required to protect the power transistor Mpower. The reliability of the power transistor Mpower is guaranteed, and the circuit size of the voltage regulator can be small.

However, in some designs derived from the example of figures 4A and 4B, there may be a high-voltage device between the input terminal Vsupply of the voltage regulator and the drain terminal of the power transistor Mpower. It depends on the design requirements.

The proposed voltage regulator with diode retention protects the regulated voltage Vreg from reaching zero. The digital device powered by the voltage regulator, therefore, performs well in data retention. The non-zero regulated voltage also guarantees the reliability of the power transistor Mpower.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

The present invention may also be defined by the following numbered clauses.
1. A voltage regulator with diode retention, comprising:
   an input terminal, receiving a supply voltage;
   an output terminal, providing a regulated voltage; and
   a main circuit, coupled between the input terminal and the output terminal to transform the supply voltage to a first voltage in a normal mode, wherein the first voltage is provided as the regulated voltage in the normal mode;
   wherein in a sleep mode the voltage regulator provides a diode connected between the input terminal and the output terminal, to generate a second voltage as the regulated voltage, wherein the second voltage is lower than the first voltage.
2. The voltage regulator with diode retention as claimed in clause 1, wherein:
   the main circuit has a power transistor connected between the input terminal and the output terminal of the voltage regulator, to generate an active current in the normal mode, wherein the active current is fed to a load device connected to the output terminal of the voltage regulator; and
   in the sleep mode, the power transistor is biased to turn off the active current, and the diode, which is another device different from the power transistor, is connected between the input terminal and the output terminal of the voltage regulator to provide a standby current to the load device, wherein the standby current is lower than the active current.
3. The voltage regulator with diode retention as claimed in clause 1, wherein:
   the main circuit has a power transistor, wherein the power transistor is a metal-oxide-semiconductor field-effect transistor having a drain terminal coupled to the input terminal of the voltage regulator, and a source terminal coupled to the output terminal of the voltage regulator;
   in the normal mode, the power transistor is biased to provide an active current to a load device connected to the output terminal of the voltage regulator; and
   in the sleep mode, the power transistor is biased to turn off the active current, and the diode, which is another device different from, is connected between the input terminal and the output terminal of the voltage regulator to provide a standby current to the load device, wherein the standby current is lower than the active current.
4. The voltage regulator with diode retention as claimed in clause 3, wherein:
   the power transistor is a core device operated within a limited voltage range that is narrower than an operational range corresponding to the supply voltage.
5. The voltage regulator with diode retention as claimed in clause 4, without any high-voltage device, operated within a wider high-voltage range than the limited voltage range, between the input terminal of the voltage regulator and the drain terminal of the power transistor.
6. The voltage regulator with diode retention as claimed in clause 3, wherein:
   the diode is formed by a p-channel metal-oxide-semiconductor field-effect transistor having a source terminal coupled to the input terminal of the voltage regulator, a drain terminal coupled to the output terminal of the voltage regulator, and a gate terminal coupled to the drain terminal of the p-channel metal-oxide-semiconductor field-effect transistor.
7. The voltage regulator with diode retention as claimed in clause 6, further comprising:
   a current-to-voltage component coupled between the input terminal of the voltage regulator and the source terminal of the p-channel metal-oxide-semiconductor field-effect transistor.
8. The voltage regulator with diode retention as claimed in clause 3, wherein:
   the diode is formed by an n-channel metal-oxide-semiconductor field-effect transistor having a drain terminal coupled to the input terminal of the voltage regulator, a source terminal coupled to the output terminal of the voltage regulator, and a gate terminal coupled to the drain terminal of the n-channel metal-oxide-semiconductor field-effect transistor.
9. The voltage regulator with diode retention as claimed in clause 8, further comprising:
   a current-to-voltage component coupled between the source terminal of the n-channel metal-oxide-semiconductor field-effect transistor and the output terminal of the voltage regulator.
10. The voltage regulator with diode retention as claimed in clause 3, wherein:
   the diode is formed by a two-end component having an anode coupled to the input terminal of the voltage regulator and a cathode coupled to the output terminal of the voltage regulator.
11. The voltage regulator with diode retention as claimed in clause 3, wherein:
   the diode is formed by a core device as well as an input and output device connected in parallel with the core device; and
   the core device operates within a limited voltage range, and the input and output device operates within a wider high-voltage range than the limited voltage range.
12. The voltage regulator with diode retention as claimed in clause 3, wherein:
   the diode is formed by an n-channel metal-oxide-semiconductor field-effect transistor and a p-channel metal-oxide-semiconductor field-effect transistor;
   the n-channel metal-oxide-semiconductor field-effect transistor has a drain terminal coupled to the input terminal of the voltage regulator, a source terminal coupled to the output terminal of the voltage regulator, and a gate terminal coupled to the drain terminal of the n-channel metal-oxide-semiconductor field-effect transistor; and
   the p-channel metal-oxide-semiconductor field-effect transistor has a source terminal coupled to the input terminal of the voltage regulator, a drain terminal coupled to the output terminal of the voltage regulator, and a gate terminal coupled to the drain terminal of the p-channel metal-oxide-semiconductor field-effect transistor.
13. The voltage regulator with diode retention as claimed in clause 3, wherein the main circuit further comprises:
   a first resistor and a first switch coupled in series between the source terminal of the power transistor and a ground terminal, wherein the first switch is closed in the normal mode, and is open in the sleep mode;
   a second switch placed between a gate terminal of the power transistor and the source terminal of the power transistor, wherein the second switch is open in the normal mode, and is closed in the sleep mode;
   an operational amplifier, having a first input terminal receiving a reference voltage, and a second input terminal coupled to the source terminal of the power transistor; and
   a third switch, coupled between an output terminal of the operational amplifier and the gate terminal of the power transistor, wherein the third switch is closed in the normal mode, and open in the sleep mode.
14. The voltage regulator with diode retention as claimed in clause 1, wherein:
   the main circuit has a power transistor connected between the input terminal and the output terminal of the voltage regulator to generate an active current in the normal mode, wherein the active current is fed to a load device connected to the output terminal of the voltage regulator; and
   in the sleep mode, a gate terminal of the power transistor is coupled to a drain terminal of the power transistor to form the diode that provides a standby current to the load device, wherein the standby current is lower than the active current.
15. The voltage regulator with diode retention as claimed in clause 14, further comprising:
   a voltage divider, enabled in the sleep mode to divide the supply voltage to generate a bias voltage that is coupled to the gate terminal of the power transistor.
16. The voltage regulator with diode retention as claimed in clause 15, wherein the voltage divider comprises:
   a second resistor and a fourth switch, coupled in series between the input terminal of the voltage divider and the gate terminal of the power transistor, wherein the fourth switch is open in the normal mode, and closed in the sleep mode; and
   a third resistor and a fifth switch, coupled in series between the gate terminal of the power transistor and a ground terminal, wherein the fifth switch is open in the normal mode, and closed in the sleep mode.
17. The voltage regulator with diode retention as claimed in clause 15, wherein:
   the power transistor is a core device operated within a limited voltage range that is narrower than an operational range corresponding to the supply voltage.
18. The voltage regulator with diode retention as claimed in clause 17, without any high-voltage device, operated within a wider high-voltage range than the limited voltage range, between the input terminal of the voltage regulator and the drain terminal of the power transistor.
19. The voltage regulator with diode retention as claimed in clause 15, wherein the main circuit further comprises:
   a first resistor and a first switch coupled in series between a source terminal of the power transistor and a ground terminal, wherein the first switch is closed in the normal mode, and is open in the sleep mode;
   an operational amplifier, having a first input terminal receiving a reference voltage, and a second input terminal coupled to the source terminal of the power transistor; and
   a third switch, coupled between an output terminal of the operational amplifier and the gate terminal of the power transistor, wherein the third switch is closed in the normal mode, and open in the sleep mode.
20. An electronic device, comprising:
   the voltage regulator with diode retention and generating the regulated voltage as claimed in clause 1; and
   a digital device including digital flip-flops, wherein the digital device is powered by the regulated voltage provided by the voltage regulator, with data retention in the sleep mode.

## Claims

1. A voltage regulator (102, 200) with diode retention, comprising:
an input terminal (Vsupply), receiving a supply voltage;
an output terminal (Vreg), providing a regulated voltage; and
a main circuit (204, 302), coupled between the input terminal (Vsupply) and the output terminal (Vreg) to transform the supply voltage to a first voltage (Vreg1) in a normal mode, wherein the first voltage (Vreg1) is provided as the regulated voltage in the normal mode;
wherein in a sleep mode the voltage regulator (102, 200) provides a diode (108, D) connected between the input terminal (Vsupply) and the output terminal (Vreg), to generate a second voltage (Vreg2) as the regulated voltage, wherein the second voltage (Vreg2) is lower than the first voltage (Vreg1).

2. The voltage regulator (200) with diode retention as claimed in claim 1, wherein:
the main circuit (302) has a power transistor (Mpower) connected between the input terminal (Vsupply) and the output terminal (Vreg) of the voltage regulator (200), to generate an active current in the normal mode, wherein the active current is fed to a load device (304) connected to the output terminal (Vreg) of the voltage regulator (200); and
in the sleep mode, the power transistor (Mpower) is biased to turn off the active current, and the diode (108, D), which is another device different from the power transistor (Mpower), is connected between the input terminal (Vsupply) and the output terminal (Vreg) of the voltage regulator (200) to provide a standby current to the load device (304), wherein the standby current is lower than the active current.

3. The voltage regulator (200) with diode retention as claimed in claim 1, wherein:
the main circuit (302) has a power transistor (Mpower), wherein the power transistor (Mpower) is a metal-oxide-semiconductor field-effect transistor having a drain terminal coupled to the input terminal (Vsupply) of the voltage regulator (200), and a source terminal coupled to the output terminal (Vreg) of the voltage regulator (200);
in the normal mode, the power transistor (Mpower) is biased to provide an active current to a load device (304) connected to the output terminal (Vreg) of the voltage regulator (200); and
in the sleep mode, the power transistor (Mpower) is biased to turn off the active current, and the diode (108, D), which is another device different from, is connected between the input terminal (Vsupply) and the output terminal (Vreg) of the voltage regulator (200) to provide a standby current to the load device (304), wherein the standby current is lower than the active current.

4. The voltage regulator (200) with diode retention as claimed in claim 3, wherein:
the power transistor (Mpower) is a core device operated within a limited voltage range that is narrower than an operational range corresponding to the supply voltage.

5. The voltage regulator (200) with diode retention as claimed in claim 4, without any high-voltage device, operated within a wider high-voltage range than the limited voltage range, between the input terminal (Vsupply) of the voltage regulator (200) and the drain terminal of the power transistor (Mpower).

6. The voltage regulator (200) with diode retention as claimed in claim 3, wherein:
the diode (108, D) is formed by a p-channel metal-oxide-semiconductor field-effect transistor having a source terminal coupled to the input terminal (Vsupply) of the voltage regulator (200), a drain terminal coupled to the output terminal (Vreg) of the voltage regulator (200), and a gate terminal coupled to the drain terminal of the p-channel metal-oxide-semiconductor field-effect transistor.

7. The voltage regulator (200) with diode retention as claimed in claim 6, further comprising:
a current-to-voltage component coupled between the input terminal (Vsupply) of the voltage regulator (200) and the source terminal of the p-channel metal-oxide-semiconductor field-effect transistor.

8. The voltage regulator (200) with diode retention as claimed in claim 3, wherein:
the diode (108, D) is formed by an n-channel metal-oxide-semiconductor field-effect transistor having a drain terminal coupled to the input terminal (Vsupply) of the voltage regulator (200), a source terminal coupled to the output terminal (Vreg) of the voltage regulator (200), and a gate terminal coupled to the drain terminal of the n-channel metal-oxide-semiconductor field-effect transistor.

9. The voltage regulator (200) with diode retention as claimed in claim 8, further comprising:
a current-to-voltage component coupled between the source terminal of the n-channel metal-oxide-semiconductor field-effect transistor and the output terminal (Vreg) of the voltage regulator (200).

10. The voltage regulator (200) with diode retention as claimed in claim 3, wherein:
the diode (108, D) is formed by a two-end component having an anode coupled to the input terminal (Vsupply) of the voltage regulator (200) and a cathode coupled to the output terminal (Vreg) of the voltage regulator (200); or
wherein:
the diode (108, D) is formed by a core device as well as an input and output device connected in parallel with the core device; and
the core device operates within a limited voltage range, and the input and output device operates within a wider high-voltage range than the limited voltage range; or
wherein:
the diode (108, D) is formed by an n-channel metal-oxide-semiconductor field-effect transistor and a p-channel metal-oxide-semiconductor field-effect transistor;
the n-channel metal-oxide-semiconductor field-effect transistor has a drain terminal coupled to the input terminal (Vsupply)of the voltage regulator (200), a source terminal coupled to the output terminal (Vreg) of the voltage regulator (200), and a gate terminal coupled to the drain terminal of the n-channel metal-oxide-semiconductor field-effect transistor; and
the p-channel metal-oxide-semiconductor field-effect transistor has a source terminal coupled to the input terminal (Vsupply) of the voltage regulator (200), a drain terminal coupled to the output terminal (Vreg) of the voltage regulator (200), and a gate terminal coupled to the drain terminal of the p-channel metal-oxide-semiconductor field-effect transistor; or
wherein the main circuit (302) further comprises:
a first resistor and a first switch coupled in series between the source terminal of the power transistor (Mpower) and a ground terminal, wherein the first switch is closed in the normal mode, and is open in the sleep mode;
a second switch placed between a gate terminal of the power transistor (Mpower) and the source terminal of the power transistor (Mpower), wherein the second switch is open in the normal mode, and is closed in the sleep mode;
an operational amplifier, having a first input terminal (Vsupply) receiving a reference voltage, and a second input terminal (Vsupply) coupled to the source terminal of the power transistor (Mpower); and
a third switch, coupled between an output terminal (Vreg) of the operational amplifier and the gate terminal of the power transistor (Mpower), wherein the third switch is closed in the normal mode, and open in the sleep mode.

11. The voltage regulator (200) with diode retention as claimed in claim 1, wherein:
the main circuit (302) has a power transistor (Mpower) connected between the input terminal (Vsupply) and the output terminal (Vreg) of the voltage regulator (200) to generate an active current in the normal mode, wherein the active current is fed to a load device (304) connected to the output terminal (Vreg) of the voltage regulator (200); and
in the sleep mode, a gate terminal of the power transistor (Mpower) is coupled to a drain terminal of the power transistor (Mpower) to form the diode (108, D) that provides a standby current to the load device (304), wherein the standby current is lower than the active current.

12. The voltage regulator (200) with diode retention as claimed in claim 11, further comprising:
a voltage divider (402), enabled in the sleep mode to divide the supply voltage to generate a bias voltage that is coupled to the gate terminal of the power transistor (Mpower).

13. The voltage regulator (200) with diode retention as claimed in claim 12, wherein the voltage divider (402) comprises:
a second resistor and a fourth switch, coupled in series between the input terminal (Vsupply) of the voltage divider (402) and the gate terminal of the power transistor (Mpower), wherein the fourth switch is open in the normal mode, and closed in the sleep mode; and
a third resistor and a fifth switch, coupled in series between the gate terminal of the power transistor (Mpower) and a ground terminal, wherein the fifth switch is open in the normal mode, and closed in the sleep mode; or
wherein the main circuit (302) further comprises:
a first resistor and a first switch coupled in series between a source terminal of the power transistor (Mpower) and a ground terminal, wherein the first switch is closed in the normal mode, and is open in the sleep mode;
an operational amplifier, having a first input terminal (Vsupply) receiving a reference voltage, and a second input terminal (Vsupply) coupled to the source terminal of the power transistor (Mpower); and
a third switch, coupled between an output terminal (Vreg) of the operational amplifier and the gate terminal of the power transistor (Mpower), wherein the third switch is closed in the normal mode, and open in the sleep mode.

14. The voltage regulator (200) with diode retention as claimed in claim 12, wherein:
the power transistor (Mpower) is a core device operated within a limited voltage range that is narrower than an operational range corresponding to the supply voltage.

15. The voltage regulator (200) with diode retention as claimed in claim 14, without any high-voltage device, operated within a wider high-voltage range than the limited voltage range, between the input terminal (Vsupply) of the voltage regulator (200) and the drain terminal of the power transistor (Mpower).
